# EUROPÄISCHE PATENTSCHRIFT

(11) **EP 0 830 384 B1**
(45) Veröffentlichungstag und Bekanntmachung des Hinweises auf die Patenterteilung: **20.10.1999**
(21) Anmeldenummer: 96917352.5
(22) Anmeldetag: 10.06.1996
(51) Int. Cl.: C08F 2/10

(54) **VERFAHREN ZUR HERSTELLUNG VON DISPERSIONEN WASSERLÖSLICHER VINYLPOLYMERER UND STABILISATOR ZUR DURCHFÜHRUNG DES VERFAHRENS**
PROCESS FOR PRODUCING DISPERSIONS OF WATER-SOLUBLE VINYL POLYMERS AND STABILISER FOR IMPLEMENTING THE PROCESS
PROCEDE DE PRODUCTION DE DISPERSIONS DE POLYMERES VINYLIQUES SOLUBLES DANS L'EAU, ET STABILISANT PERMETTANT DE METTRE LEDIT PROCEDE EN UVRE

(30) Priorität: 09.06.1995 DE 19521096
(43) Veröffentlichungstag der Anmeldung: 25.03.1998
(73) Patentinhaber: FRAUNHOFER-GESELLSCHAFT ZUR FÖRDERUNG DER ANGEWANDTEN FORSCHUNG E.V., 80636 München (DE)
(72) Erfinder: JAEGER, Werner, D-14532 Kleinmachnow (DE); ZIMMERMANN, Arvid, D-13187 Berlin (DE); REICHERT, Karl-Heinz, D-14050 Berlin (DE); ZEITZ, Katrin, 67067 Ludwigshafen (DE)
(86) Internationale Anmeldenummer: DE9601063
(87) Internationale Veröffentlichungsnummer: WO9641821

(56) Entgegenhaltungen:
- EP-A- 0 630 909
- EP-A- 0 637 598
- DE-A- 4 216 167

## Beschreibung

Die Erfindung betrifft ein Verfahren zur Herstellung von Dispersionen wasserlöslicher kationischer Vinylpolymerer unter Verwendung von Blockcopolymeren, die aus einem kationischen Vinylmonomer und Ethylenoxid gebildet werden, als Dispersionstabilisatoren. Die Erfindung betrifft weiterhin die Dispersionsstabilisatoren zur Durchführung des Verfahrens. Dabei werden bei stetig niedrigen Viskositäten der Reaktionsmischung und mit bis zu hohen Umsätzen konstanter Reaktionsgeschwindigkeit langzeitstabile Dispersionen gebildet. Die Polymerdispersionen können durch einfaches Verdünnen mit Wasser in Lösung gebracht und dann als Prozeßhilfsmittel für Trennprozesse eingesetzt werden.

Wasserlösliche, kationische Vinylpolymere werden technisch in großem Umfang als Prozeßhilfsmittel für die Durchführung von Trennprozessen durch z.B. Flokkung, Koagulation, Retention und Entwässerung genutzt. Sie gelangen u.a. in der Wasseraufbereitung und Abwasserreinigung, der Papier-, Kohle- und Erzindustrie, Erdölgewinnung und der Nahrungsgüterwirtschaft zum Einsatz. Bei meist geringen Einsatzmengen haben sie z.T technologiebestimmende Bedeutung erlangt. Die Herstellung dieser Polymeren erfolgt durch radikalische Homo- oder Copolymerisation in homogener oder heterogener Phase (C.L. McCormick, J. Bock und D.N. Schulz: Water-Soluble Polymers, in: Encyclopedia of Polymer Science and Technology, Wiley, New York 1989, Vol. 17, S. 730 ff). Die homogene Lösungspolymerisation in Wasser hat den Nachteil, daß bereits bei Polymergehalten unterhalb 10 Masse-% hochviskose Systeme vorliegen, die eine weitere Erhöhung des Wirkstoffgehaltes nicht zulassen. Der niedrige Polymeranteil im Finalprodukt führt zu schlechten Raum-Zeit-Ausbeuten bei der Synthese und zu erhöhten Transportkosten beim Transport zum Anwender. Die Invers-Emulsionspolymerisation in organischen Lösungsmitteln als Trägerphase ergibt wesentlich höhere Feststoffgehalte. Sie hat aber den Nachteil, daß das Arbeiten mit Lösungsmitteln besondere Schutzmaßnahmen erfordert und daß bei der Applikation der Produkte die gesamten Lösungsmittel in die Umwelt gelangen (H. Dautzenberg, W. Jaeger, J. Kötz, B.Philipp, Ch. Seidel, D. Stscherbina: Polyelectrolytes. Carl Hanser Verlag, München 1994, S. 13 ff). Die Invers-Suspensionspolymerisation in hydrophoben, brennbaren Lösungsmitteln als Trägerphase schließlich führt nach Isolierung und Trocknung der Polymeren zu pulverförmigen Produkten. Der mehrstufige Prozeß ist jedoch kostenintensiv und benötigt viel Energie (H. Spoor, Angewandte Makromolekulare Chemie 123/124 (1984) S. 1 ff).

Alternativ wurde deshalb die Herstellung von Dispersionen wasserlöslicher Polymerer ohne organische Lösungsmittel als Trägerphase vorgeschlagen. Die EP 183 466 beschreibt die Polymerisation wasserlöslicher Monomerer in wäßrigen Lösungen anorganischer Salze in Gegenwart von Polyolen mit Molekulargewichten bis 600 g/mol und/oder Polyelektrolyten, die durch Homopolymerisation ionischer Vinylmonomerer oder deren statistische Copolymerisation gewonnen wurden, als Dispersionsstabilisatoren. Das Canad. Pat. 2 096 472 (DEP 42 16 167.3 1992/05/18) beschreibt die Polymerisation einer Kombination von wasserlöslichen und hydrophoben Monomoren, ggf. in Kombination mit einem amphiphatischen Monomer, in Gegenwart eines Polyalkylenethers oder eines Polyelektrolyten, der mit dem dispergierten Polymer unverträglich ist und Molekulargewichte < 5 * 10⁵ g/mol hat. Letzterer dient als Dispersionsstabilisator. Bevorzugt wird Poly(diallyldimethylammoniumchlorid) verwendet. Das resultierende dispersionsbildende Polymer hat Molmassen von wenigstens 10⁶ g/mol.

Der Nachteil des Verfahrens nach der EP 183 466 besteht darin, daß die Viskosität der resultierenden Dispersionen noch vergleichsweise hoch ist. Von besonderem Nachteil aber ist, daß im Verlauf der Polymerisation Viskositätsmaxima durchlaufen werden, die der Viskosität von Lösungspolymerisationen entsprechen und deshalb die Prozeßtechnik erschweren. Der Nachteil des Canad. Pat. 2 096 472 ist, daß erhebliche Mengen an Dispersionsstabilisator, und zwar bis zu 80 Masse-% bezogen auf eingesetzte Monomere, zur Anwendung kommen. Auch hier kann die Viskosität des polymerisierenden Systems größer sein als die Viskosität des Endproduktes. Nachteilig bei beiden genanten Verfahren ist, daß die resultierenden Dispersionen bereits nach relativ kurzen Zeiten koagulieren und dadurch die Lagerfähigkeit beschränkt ist.

Es ist daher die Aufgabe der Erfindung, in einem technologisch einfachen Syntheseverfahren langzeitstabile Dispersionen wasserlöslicher kationischer Vinylpolymer herzustellen, wobei während der gesamten Reaktion eine niedrige Viskosität des polymerisierenden Systems eingehalten werden soll. Verfahrensgemäß wird die Aufgabe durch die kennzeichnenden Merkmale des Anspruchs 1 in Bezug auf den Stabilisator durch die kennzeichnenden Merkmale des Anspruchs 6 gelöst. Die Unteransprüche zeigen vorteilhafte Weiterbildungen auf.

Erfindungsgemäß wird somit so vorgegangen, daß wasserlösliche hydrophob modifizierte Vinylmonomere radikalisch in wäßrigen Salzlösungen homopolymerisiert oder mit geeigneten Comonomeren copolymerisiert werden, wobei als Dispersionsstabilisatoren Blockcopolymere aus einem kationischen Vinylmonomer und Ethylenoxid verwendet werden.

Als Dispersionsstabilisatoren werden Blockcopolymere aus einem kationischen Vinylmonomer und Ethylenoxid verwendet. Der kationische Block des Dispersionsstabilisators wird aus Monomeren der allgemeinen Formel I gebildet, 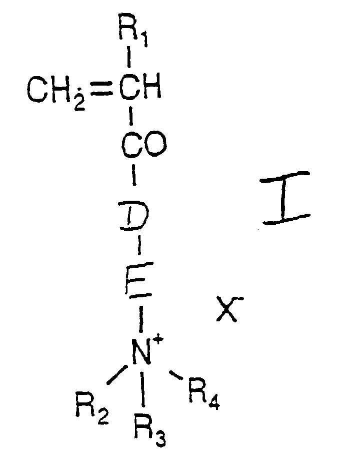 in der R₁ Wasserstoff oder einen Methylrest, R₂ und R₃ einen Alkylrest mit 1 bis 6 Kohlenstoffatomen, R⁴ einen Alkylrest mit 1-6 Kohlenstoffatomen, oder einen Benzylrest, D die Gruppierung NH oder 0 und E einen Alkylenrest oder Hydroxyalkylenrest mit 2 bis 6 Kohlenstoffatomen, und X⁻ ein Halogenid, Acetat oder Methosulfat bedeuten. Weiterhin kann der kationische Block des Blockcopolymeren aus den Monomeren Diallyldimethylammoniumchlorid, Vinylpyridiniumhalogenid, N-Vinylimidazol oder N-Vinylimidazoliumhalogenid gebildet werden. Der kationische Block hat eine Molmasse zwischen 1000 und 300 000 g/mol. Die Molmasse des Polyethylenoxidblocks liegt zwischen 200 und 20 000 g/mol. Die Synthese des Blockcopolymeren kann nach Angaben in "Macromolekular Design, Concept and Practice", Hrsg. Munmaya K. Mishra, Polymer Frontiers International, Inc. Hopewell, USA, S. 265 ff. und 313 ff. über folgende Stufen erfolgen: 1. Synthese eines Makroinitiators durch Umsetzung von Polyethylenglykol mit Azobisisobutyronitril 2. Polymerisation des kationischen Monomer nach Kettenstart durch den Makroinitiator.

Als wasserlösliche, hydrophob modifizierte Vinylmonomere können sowohl kationische als auch nichtionische Monomere eingesetzt werden. Kationische hydrophobe Vinylmonomere haben bevorzugt die allgemeine Formel II, 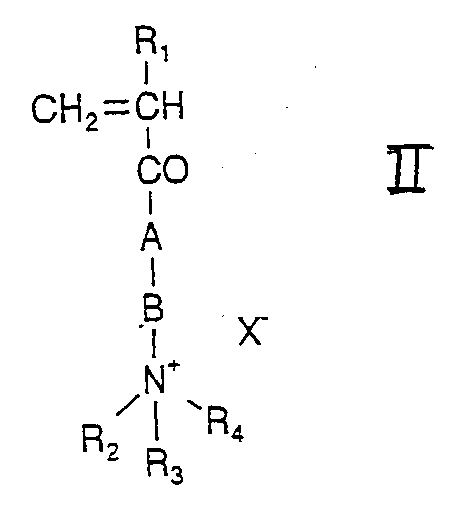 worin R₁ Wasserstoff oder einen Methylrest, R₂ und R₃ enen Alkylrest mit 1 bis 6 Kohlenstofatomen, R₄ einen Alkylrest mit 1 bis 6 Kohlenstoffatomen oder einem Benzylrest, A die Gruppierung NH oder 0 und B einen Alkylenrest oder Hydroxyalkylenrest mit 2 bis 6 Kohlenstoffatomen bedeuten. X⁻ stellt ein Halogenid, Acetat oder Methosulfat dar.
Nichtionische hydrophobe Vinylmonomere weisen bevorzugt die allgemeine Formel III auf.

CH₂ = C(R₁) - CO - A - R₂ III

worin R₁ Wasserstoff oder einen Methylrest, A die Gruppierung NH oder O und R₂ einen Alkylrest mit 2 bis 10 Kohlenstoffatomen bedeutet.

Als Comonomere können sowohl kationische als auch nichtionische wasserlösliche Vinylmonomere verwendet werden. Kationische wasserlösliche Comonomere haben bevorzugt ebenfalls die allgemeine Formel II, jedoch bedeuten dann R₁ Wasserstoff oder einen Methylrest, R₂, R₃ und R₄ einen Methyl- oder Ethylrest, A die Gruppierung NH oder 0 und B einen Alkylenrest oder Hydroxyalkylenrest mit 2 bis 4 Kohlenstoffatomen. X⁻ stellt ein Halogenid oder Methosulfat dar. Weitere bevorzugte kationische Comonomere sind Diallyldimethylammoniumchlorid, Vinylpyridiniumhalogenid, N-Vinylimidazol und N-Vinylimidazoliumhalogenid. Nichtionische wasserlösliche Comonomere haben bevorzugt die allgemeine Formel IV.

CH₂ = C(R₁) - CO - N (R₁, R₂) IV

Es bedeuten R₁ Wasserstoff oder einen Methylrest, R₂ und R₃ Wasserstoff, einen Alkylrest oder einen Hydroxylalkylrest mit 1 bis 4 Kohlenstoffatomen. Als nichtionisches wasserlösliches Comonomer kann N-Methyl-N-vinylacetamid eingesetzt werden.

Homopolymerisationen können nur mit den wasserlöslichen, hydrophob modifizierten kationischen Vinylmonomeren der allgemeinen Formel II durchgeführt werden. Copolymerisationen mit den genannten kationischen und/oder nichtionischen wasserlöslichen Vinylmonomeren können z.B. mit den hydrophob modifizierten kationischen Vinylmonomeren der allgemeinen Formel II als auch mit den nichtionischen hydrophoben Vinylmonomeren der allgemeinen Formel III erfolgen.

Die Polymerisationen werden in wäßrigen Salzlösungen durchgeführt. Als Salze können anorganische Salze wie Natriumchlorid, Natriumsulfat, Ammoniumchlorid, Ammoniumsulfat, Ammoniumcarbonat, Natriumdihydrogenphosphat, Dinatriumhydrogenphosphat sowie niedermolekulare polymere Ammoniumsalze mit Molmassen < 80 000 g/mol, z.B. Poly(dimethyldiallylammoniumchlorid), oder deren Mischungen verwendet werden. Die Salze werden in Mengen größer als 10 Masse-%, bezogen auf die Gesamtmasse des Reaktionsansatzes, eingesetzt.

Zu Herstellung der Dispersionen wird z.B. ein hydrophobes Monomer der allgemeinen Formel II oder eine Mischung dieser Monomeren oder eine Mischung von 1 bis 50 Masse-% hydrophobe Monomere der allgemeinen Formel II, 0 bis 25 Masse-% hydrophobe Monomere der allgemeinen Formel III und 99 bis 50 Masse-% kationische und/oder nichtionogene Comonomere (z.B. Strukturen II und IV, Diallyldimethylammoniumchlorid, N-Methyl-N-Vinylacetamid), wobei die Summe der Monomeren und Comonomeren 100 Masse-% ist, in einer wäßrigen Salzlösung gelöst. Die wäßrige Salzlösung enthält entweder anorganische Salze oder aber niedermolekulare polymere Ammoniumsalze in Mengen zwischen 10 Masse-%, bezogen auf die Gesamtmasse des Reaktionsansatzes, bis zur Sättigungsgrenze. Der Anteil aller Monomeren beträgt 10 bis 75 Masse-%, bezogen auf die Gesamtmasse des Reaktionsansatzes. Anschließend werden zwischen 1 und 10 Masse-%, bezogen auf die Gesamtmase der eingesetzten Monomeren, des Dispersionsstabilisators zugegeben. Die Polymerisation erfolgt im Temperaturbereich 30 bis 90°C, bevorzugt im Bereich 40 bis 60°C, unter Inertgas. Sie wird gestartet mit üblichen radikalischen Initiatoren, z.B., z.B. 2,2'-Azobis(2-amidinpropan)hydrochlorid. Die Monomere können zu Beginn der Reaktion vorgelegt oder im Verlauf der Reaktion zudosiert werden. Der Initiator kann zu Beginn der Reaktion vollständig oder anteilig zugegeben werden; im letzteren Fall wird die restliche Menge im Verlauf der Reaktion dosiert. Die eingesetzte Initiatormenge beträgt 10⁻³ bis 2 Masse-%, bezogen auf den gesamten Reaktionsansatz. Der Endumsatz der Monomeren ist > 98 Masse-%, die Polymerisationszeiten liegen zwischen 30 Minuten und 9 Stunden. Die Molmasse der Polymeren ist > 10⁶ g/mol. Die Viskositäten der Dispersionen sind < 10 mPas.

Die resultierende Polymerisation kann durch Verdünnen mit Wasser in anwendungsbreite Polymerlösungen überführt werden.

Das neue Verfahren zur Herstellung von Dispersionen wasserlöslicher kationischer Vinylpolymerer bietet gegenüber den bekannten Verfahren folgende Vorteile:
1. Die Polymerisation verläuft bis zu hohen Umsätzen mit konstanter Geschwindigkeit.
2. Es werden Dispersionen niedriger Viskosität gebildet. Die Viskosität der Enddispersion liegt nur wenig oberhalb der Viskosität der Ausgangsmischung von Monomeren, Salz, Stabilisator und Wasser. Zwischenzeitlich erfolgt keine Viskositätserhöhung.
3. Die Enddispersion ist über lange Zeit stabil. Eventuell gebildete Bodensätze können auch nach mehrmonatiger Lagerung durch einfaches Schütteln redispergiert werden.

Das Verfahren wird durch die folgenden Beispiele näher erläutert werden. Die Beispiele stellen jedoch keine Einschränkungen dar.

### Beispiel 1

Ein thermostatierbarer innentemperaturgeregelter Doppelmantelreaktor mit Rührer, Rückflußkühler, Temperaturkühler und Gaseinleitungsvorrichtung wird mit 238,2 g einer 75-prozentigen wäßrigen Lösung von Methacryloyl-oxyethyl-dimethylbenzylammoniumchlorid, 159 g Natriumchlorid, 9 g Stabilisator (Blockcopolymer mit einem Block aus Polyethylenoxid der Molmasse 2000 g/mol und einem Block aus Poly(methacryloyl-oxyethyl-trimethylammoniumchlorid) der Molmasse 14000 g/mol) und 731 g Wasser gefüllt. Dann wird die Apparatur unter ständigem Rühren 1 Stunde mit Stickstoff gespült und danach auf 50°C temperiert. Danach wird eine Lösung von 2,44 g 2,2'Azobis(2-amidinopropan) hydrochlorid in 10 ml Wasser zugegeben. Unter ständigem Rühren wird der Ansatz bei 50°C gehalten. Die Viskosität bleibt über die gesamte Reaktionsdauer konstant. Nach 60 Minuten ist die Reaktion beendet, der Endumsatz beträgt 99 %. Die Dispersion hat eine Viskosität von 6,5 mPas. Die Molmasse des Polymeren beträgt 2 * 10⁶ g/mol.

### Beispiel 2

Bei gleicher Verfahrensweise wie in Beispiel 1 werden 130,4 g Methacryloyl-oxyethyl-dimethylbenzylammoniumchlorid, 76 g Acrylamid, 159 g Natriumchlorid, 9 g des Stabilisators aus Beispiel 1 und 794 g Wasser eingesetzt. Nach 60 Minuten ist die Reaktion beendet. Der Endumsatz ist 98 %, die Viskosität der resultierenden Dispersion beträgt 9 mPas.

### Beispiel 3

Bei gleicher Verfahrensweise wie in Beispiel 1 werden 130,4 g Methacryloyl-oxyethyl-dimethylbenzylammoniumchlorid, 240 g Acrylamid, 159 g Natriumchlorid, 9 g des Stabilisators aus Beispiel 1 und 630 g Wasser eingesetzt. Nach 70 Minuten ist die Reaktion beendet. Der Endumsatz ist 98 %.

## Patentansprüche

1. Verfahren zur Herstellung von Dispersionen wasserlöslicher kationischer Vinylpolymeren durch radikalische Homopolymerisation wasserlöslicher, katinonischer hydrophob modifizierter Vinylmonomeren oder durch radikalische Copolymerisation dieser Vinylmonomeren mit kationischen wasserlöslichen und/oder wasserlöslichen neutralen Vinylmonomeren oder durch radikalische Copolymerisation von kationischen hydrophoben modifizierten wasserlöslichen Vinylmonomeren mit wasserlöslichen neutralen Vinylmonomeren in wäßriger Salzlösungen unter Verwendung eines wasserlöslichen Initiators und in Gegenwart eines Stabilisators,
dadurch **gekennzeichnet,**
daß als Stabilisator ein Blockcopolymer aus einem kationischen Vinylmonomer und Ethylenoxid eingesetzt wird.

2. Verfahren nach Anspruch 1,
dadurch gekennzeichnet, daß der kationische
Block des Blockcopolymeren aus Monomeren der allgemeinen Formel I gebildet wird, 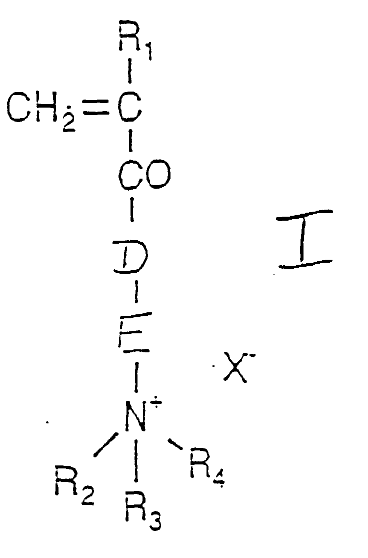 worin R₁ Wasserstoff oder einen Methylrest, R₂ und R₃ einen Alkylrest mit 1-6 Kohlenstoffatomen, R₄ einen Alkylrest mit 1 bis 6 Kohlenstoffatomen oder einen Benzylrest D die Gruppierung NH oder O und E einen Alkylenrest oder Hydroxylalkylenrest mit 2 bis 6 Kohlenstoffatomen und X⁻ ein Halogenid, Acetat oder Methylsulfonat bedeuten.

3. Verfahren nach Anspruch 1,
dadurch gekennzeichnet, daß der kationische
Block des Blockcopolymeren aus den Monomeren Diallyldimethylammoniumchlorid, Vinylpyridiniumhalogenid, N-Vinylimidazol oder N-Vinylimidazoliumhalogenid gebildet wird.

4. Verfahren nach mindestens einem der Ansprüche 1 bis 3,
dadurch gekennzeichnet, daß der Stabilisator in Mengen von 1 bis 10 Masse-%, bezogen auf die Masse der eingesetzten Monomeren, zur Anwendung kommt.

5. Verfahren nach mindestens einem der Ansprüche 1 bis 4,
dadurch gekennzeichnet, daß die Polymerisation im Temperaturbereich von 30 - 90°C durchgeführt wird.

6. Stabilisator zur Durchführung des Verfahrens nach mindestens einem der Ansprüche 1 bis 5,
dadurch gekennzeichnet, daß der Stabilisator ein Blockcopolymer aus einem kationischen Vinylmonomer und Ethylenoxid ist.

7. Stabilisator nach Anspruch 6, dadurch gekennzeichnet, daß der kationische
Block des Blockcopolymeren aus Monomeren der allgemeinen Formel I gebildet wird. 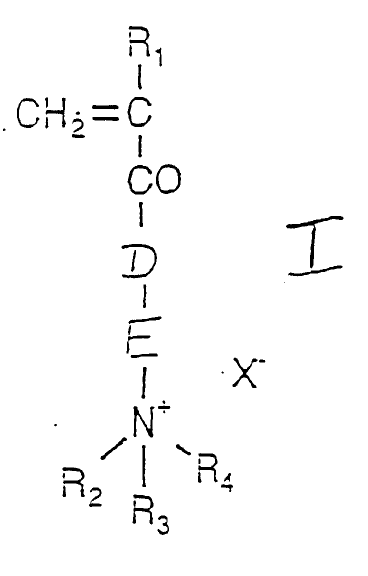 wobei die Reste die in Anspruch 2 angegebene Bedeutung besitzen.

8. Stabilisator nach Anspruch 6,
dadurch gekennzeichnet, daß der kationische
Block des Blockcopolymeren aus den Monomeren Diallyldimethylammoniumchlorid, Vinylpyridiniumhalogenid, N-Vinylimidazol oder N-Vinylimidazoliumhalogenid gebildet wird.

9. Stabilisator nach mindestens einem der Ansprüche 5 bis 8,
dadurch gekennzeichnet, daß der kationische Block des Blockpolymeren eine Molmasse zwischen 1000 und 300 000 g/mol hat.

10. Stabilisator nach mindestens einem der Ansprüche 6 bis 9,
dadurch gekennzeichnet, daß der Polyethylenoxidblock des Blockcopolymeren eine Molmasse zwischen 200 und 20 000 g/mol hat.

## Claims

1. Method for producing dispersions of water-soluble cationic vinyl polymers by radical homopolymerisation of water-soluble cationic vinyl monomers, modified to be hydrophobic, or by radical copolymerisation of these vinyl monomers with cationic water-soluble and/or water-soluble neutral vinyl monomers, or by radical copolymerisation of cationic, hydrophobic, modified water-soluble vinyl monomers with water-soluble neutral vinyl monomers in aqueous salt solutions using a water-soluble initiator and in the presence of a stabiliser,
**characterised in that**
a block copolymer of a cationic vinyl monomer and ethylene oxide is used as the stabiliser.

2. Method according to claim 1,
**characterised in that** the cationic block of the block copolymers is formed from monomers of the general formula I, 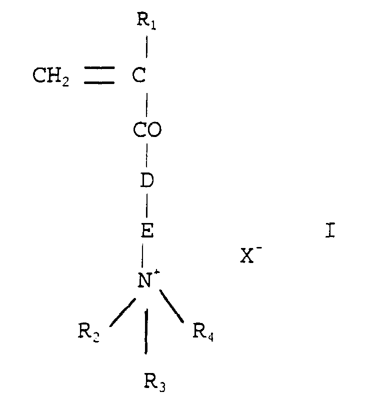 wherein R₁ represents hydrogen or a methyl residue, R₂ and R₃ represent an alkyl residue with 1 to 6 carbon atoms, R₄ represents an alkyl residue with 1 to 6 carbon atoms or a benzyl residue, D represents the grouping NH or O and E represents an alkylene residue or hydroxyalkylene residue with 2 to 6 carbon atoms and X⁻ represents a halogenide, acetate or methyl sulfonate.

3. Method according to claim 1,
**characterised in that** the cationic block of the block copolymer is formed from the monomers diallyldimethylammonium chloride, vinylpyridinium halogenide, N-vinylimidazole or N-vinylimidazolium halogenide.

4. Method according to at least one of claims 1 to 3,
**characterised in that** the stabiliser is used in amounts of between 1 and 10 % by mass, relative to the mass of the monomers used.

5. Method according to at least one of claims 1 to 4,
**characterised in that** that the polymerisation is carried out in a temperature range of between 30 and 90°C.

6. Stabiliser for carrying out the method according to at least one of claims 1 to 5,
**characterised in that** the stabiliser is a block copolymer from a cationic vinyl monomer and ethylene oxide.

7. Stabiliser according to claim 5,
**characterised in that** the cationic block of the block copolymer is formed from monomers of the general formula I. 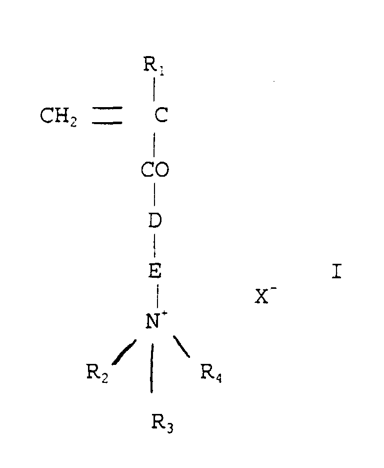 the residues having the meaning quoted in claim 2.

8. Stabiliser according to claim 6,
**characterised in that** the cationic block of the block copolymer is formed from the monomers diallyldimethylammonium chloride, vinylpyridinium halogenide, N-vinylimidazole or N-vinylimidazolium halogenide.

9. Stabiliser according to at least one of claims 5 to 8,
**characterised in that** the cationic block of the block polymer has a relative molar mass of between 100 and 300 000 g/mol.

10. Stabiliser according to at least one of claims 6 to 9,
**characterised in that** the polyethylene oxide block of the block copolymer has a relative molar mass of between 200 and 20 000 g/mol.

## Revendications

1. Procédé de production de dispersions de polymères vinyliques cationiques solubles dans l'eau, par homopolymérisation radicalaire de monomères vinyliques solubles dans l'eau, cationiques, modifiés d'une manière hydrophobe, ou par copolymérisation radicalaire de ces monomères vinyliques, avec des monomères vinyliques cationiques, solubles dans l'eau et/ou de monomères vinyliques neutres solubles dans l'eau, dans des solutions salines aqueuses en utilisant un promoteur soluble dans l'eau et en présence d'un agent stabilisant,
caractérisé en ce que
comme agent stabilisant on met en oeuvre un copolymère en bloc à base d'un monomère vinylique cationique et d'oxyde d'éthylène.

2. Procédé selon la revendication 1,
caractérisé en ce que
le bloc cationique du copolymère en bloc est formé de monomères de formule générale (I) 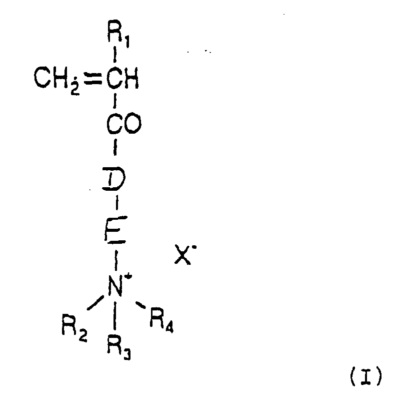 dans laquelle R₁ signifie de l'hydrogène ou un radical méthyle, R₂ et R₃ signifient un radical alkyle ayant de 1 à 6 atomes de carbone ou un radical benzyle, D signifie le groupement NH ou O, E signifie un reste alkylène ou hydroxyalkylène ayant de 2 à 6 atomes de carbone et X⁻ signifie un halogénure, un acétate ou un méthylsulfonate.

3. Procédé selon la revendication 1,
caractérisé en ce que
le bloc cationique du copolymère en bloc est formé des monomères chlorure de dialkyldiméthylammonium, halogénure de vinylpyridinium, N-vinylimidazole, ou halogénure de vinylimidazolinium.

4. Procédé selon au moins une des revendications 1 à 3,
caractérisé en ce que
l'agent stabilisant vient à utilisation en quantités allant de 1 à 10 % en masse, rapporté à la masse des monomères mis en oeuvre.

5. Procédé selon au moins une des revendications 1 à 4,
caractérisé en ce que
la polymérisation s'effectue dans une plage de températures allant de 30 à 90°C.

6. Agent stabilisant pour l'exécution du procédé selon au moins une des revendications 1 à 5,
caractérisé en ce que
l'agent stabilisant est un copolymère à base d'un monomère vinylique cationique et d'oxyde d'éthylène.

7. Agent stabilisant selon la revendication 6,
caractérisé en ce que
le bloc cationique du copolymère en bloc est formé de monomères de formule générale (I), 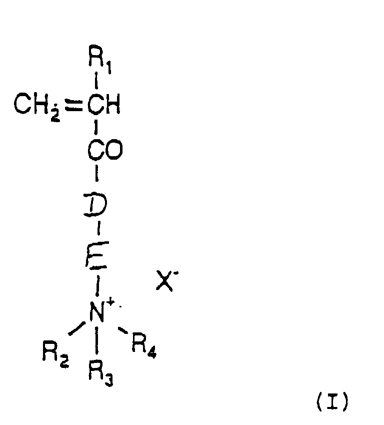 dans laquelle les restes possèdent la signification indiquée à la revendication 2.

8. Agent stabilisant selon la revendication 6,
caractérisé en ce que
le bloc cationique du copolymère en bloc est formé des monomères chlorure de diallyldiméthylammonium, halogénure de vinylpyridinium, d'halogénure de vinylimidazolium ou de N-vinylimidazole.

9. Agent stabilisant selon au moins une des revendications 5 à 8,
caractérisé en ce que
le bloc cationique du polymère en bloc a une masse molaire comprise entre 1000 et 300.000 g/mol.

10. Agent stabilisant selon au moins une des revendications 6 à 9,
caractérisé en ce que
le bloc poly-oxyde d'éthylène du copolymère en bloc a une masse molaire comprise entre 200 et 20.000 g/mol.
